# EUROPEAN PATENT SPECIFICATION

(11) **EP 3 889 449 B1**
(45) Date of publication and mention of the grant of the patent: **23.10.2024**
(21) Application number: 21165159.1
(22) Date of filing: 26.03.2021
(51) Int. Cl.: F16B 12/14, F16B 12/24, F16B 12/26

(54) **BUSH FOR FIXING COMPONENT PARTS TOGETHER**
BUCHSE ZUR BEFESTIGUNG VON BAUTEILEN ANEINANDER
DOUILLE POUR FIXATION D'ÉLÉMENT

(30) Priority: 01.04.2020 IT 202000006829
(43) Date of publication of application: 06.10.2021
(73) Proprietor: Colautti, Francesco, 33040 Corno di Rosazzo (UD) (IT)
(72) Inventor: Colautti, Francesco, 33040 Corno di Rosazzo (UD) (IT)
(74) Representative: Stucovitz, Alessandro

(56) References cited:
- WO-A1-2016/128271
- DE-U1- 202014 005 833
- FR-A1- 2 406 743
- US-A- 2 221 141
- US-A1- 2006 013 671

## Description

The present invention relates to a bush for fixing component parts to be joined together and a fixing assembly comprising such a bush.

It is known, in the technical sector of small metal products that there is a need to produce bushes, in particular metal bushes, with an inner female thread designed to allow coupling together with the threading of components mounted on other parts, such as panels and the like, which must be fastened together in various ways.

Examples of a bush according to the preamble of Claim 1 are known from US 2006-013671 A1, US2 221 141 A and DE 20 2014 005833 U1. FR 2 406 743 A describes a pin with a first end for insertion in a first bush, a second end with a threading for engaging a female thread of a second bush and annular reliefs on the shaft of the pin, for stably engaging with the first bush.

A particular example of use of these bushes consists in the application thereof to the backrests of chairs, which must be fastened to the uprights of the seat frame.

In this case, in fact, it is required that the bush must have a small thickness so that, once it has been inserted in the backrest, it remains flush with the surface thereof so as to allow operations involving painting and/or lining with fabric and/or the like without problems due to projections which are normally the cause of damage or require the operations to be repeated several times in order to complete the various coating/lining steps.

The technical problem which is posed, therefore, is that of providing a bush which is able to solve, or at least reduce, the aforementioned technical drawbacks, preferably, in such a way as not to leave visible screw components and is able to withstand high loads, in particular when applied to wooden parts.

In connection with this problem, it is also required that the bush should have small dimensions, be easy and inexpensive to produce and be able to be easily installed at high speed using normal standardized means.

These results are obtained according to the present invention by a bush according to the features of Claim 1 or Claim 6.

The present invention relates furthermore to a fixing assembly according to Claim 12, which are designed to allow the mounting thereof on different component parts for joining them stably together.

Preferred embodiments are provided by the dependent claims.

According to a preferred embodiment, the retaining means comprise an annular collar projecting towards the inside of the through-hole of the bush at the rear end of the body thereof. Said collar is preferably inclined towards the rear part of the bush.

According to a preferred further embodiment the retaining means comprise an elastic ring stably applied to the inside of the rear part of the through-hole in the bush body. The ring has preferably a coaxial hole and axial incisions extending radially from the said central hole and designed to provide the said ring with elasticity.

Such embodiments are particularly advantageous for receiving and retaining a first end of a pin, formed with a plurality of parallel annular reliefs, or with a roughness on the outer surface, or with a spherical head which may be inserted by means of a pushing force and does not have to be screwed in for engagement with the bush.

The insertion end with a spherical head advantageously allows also the disengagement and the extraction of the pin from the bush, by means of deformation of the elastic ring in a direction opposite to the direction of insertion.

According to a further preferred embodiment the retaining means comprise a female thread inside the through-hole of the body thereof, so that the bush is particularly advantageous for receiving a second end of a pin which has a thread.

The aforementioned pin is therefore configured with a second end comprising a thread, for mating with the retaining means of a second bush, in particular with the female thread of a bush according to the invention.

The means for engagement with a screwing/unscrewing tool may include a hexagonal profile or cross-shaped cut formed in the through-seat of the bush head. The hexagonal profile preferably has a diameter of the circumscribed circumference greater than the inner diameter of the coaxial through-hole of the cylindrical body, so that one end of the pin may be easily inserted.

In a further embodiment, forming the subject of Claim 6, the bush is formed as a single piece with a pin which comprises a first end for insertion in another bush, formed with a plurality of parallel annular reliefs, or with a roughness on the outer surface, or with a spherical head, for engagement with respective retaining means of another bush according to the invention.

The outer thread of a bush according to the invention is preferably symmetrical and/or has preferably a profile angle α of between 20° and 35°.

The annular reliefs of the pin (whether it be formed as a separate body or as one piece with the bush) may preferably:
- be suitable for engagement with the collar or the ring of a bush according to the invention; and/or
- have a frustoconical shape with its larger base facing the body of the pin.

The pin also has preferably a collar arranged in an intermediate position between the first end of the pin and the second end of the pin or between the first end of the pin and the rear end of the bush body and designed to form an end-of-travel stop for insertion inside the respective hole of a bush. The collar may be advantageously in the form of a polygonal, preferably hexagonal nut, shape so as to allow engagement with a corresponding tool for screwing/unscrewing the pin or the bush with pin. Alternatively or in addition, for screwing/unscrewing of the pin or the bush with pin, a cross-shaped incision may be provided on the head of the first end of the pin.

According to another advantageous aspect of the invention, the joining together of two component parts may be obtained by means of a fixing assembly, comprising a first bush according to the invention, designed to be screwed into a hole of a first component; and a second bush according to the invention, designed to be screwed into the second component.

The second bush is coupled with the second end of a pin, or it is a second bush formed as one piece with a pin according to the invention.

During use, the retaining means of the first bush are designed to engage with the first insertion end of the pin formed in the manner of a plurality of parallel annular reliefs, preferably arranged uniformly spaced along the longitudinal axis of the said pin, or with a surface roughness, so that the joining together of the two parts does not require the screwing of the first end of the pin into the first bush.

The second bush may instead comprise a female thread formed on the inner surface of the through-hole and suitable for mating with the thread of the second end of the pin.

Therefore, according to a further aspect of the invention, a method for fixing a first component together with second component to be joined together is provided, wherein a first bush according to the invention is screwed into a respective hole of the first component, and a second bush according to the invention is screwed into a respective hole of the second component.

The second bush is coupled (in particular by means of screwing) with a pin according to the invention, or is formed as one piece with the pin provided with a first insertion end according to the invention, while the first bush comprises retaining means for engagement with said first end of the pin. Therefore it is possible to perform insertion, by means of pushing, of the first end of the pin inside the through-seat of the first bush until locking by the retaining means occurs, resulting in stable joining together of the two component parts.

According to a particularly advantageous aspect of the present invention and owing to the small height of the bush, once screwing inside the respective component has been performed, the head of the first bush and/or of the second bush does not project from the respective surface of the component and is preferably arranged flush with the respective surface of the component.

The method is particularly, but not exclusively, suitable for the application where the first component is the upright of a chair and the second component is the backrest of a chair, or vice versa.

Further details may be obtained from the following description of non-limiting examples of embodiment of the subject of the present invention, provided with reference to the accompanying drawings, in which:
Figure 1: is a partially sectioned perspective view of a first embodiment of a bush according to the present invention;
Figure 2: is a top plan view of the bush according to Fig. 1;
Figure 3: shows a half-sectioned view along the plane indicated by III-III in Fig.2;
Figure 4: is a cross-section of the enlarged detail of the outer threading of the bush according to the invention;
Figure 5: is a partially sectioned perspective view of a second embodiment of a bush according to the present invention;
Figure 6: shows a half-sectioned view along the plane indicated by VI-VI in Fig.5;
Figure 7: is a perspective view of a pin suitable for coupling with the bush according to the invention;
Figure 8: is a perspective view of the two bushes and the pin arranged ready for coupling together;
Figure 9: is a perspective view of two structural parts to be joined together by means of the bush and pin according to the invention;
Figure 10: shows a schematic cross-section of the coupling joint formed between the two structural parts by means of the bush/pin assembly according to the invention;
Figure 11: a view of the rear part of a further example of embodiment of a bush according to the invention; and
Figure 12: is a view of the front part of a further example of embodiment of a bush according to the invention;
Figure 13: is a perspective view of a variation of embodiment of a pin suitable for coupling with a bush according to the invention;
Figure 14: is a perspective view of two bushes and the pin according to Fig. 13 arranged ready for coupling together; and
Figure 15: shows a schematic view, similar to that of Fig. 10, of the coupling joint formed between two structural parts by means of an assembly according to the invention comprising the pin according to Fig. 13.

As shown and assuming solely for the sake of easier description without any limiting meaning a pair of reference axes extending respectively in a longitudinal direction X-X, for the sake of simplicity shown coinciding with the axis of the bush, and transverse/radial direction Y-Y perpendicular to the first direction, as well as a front part "A" corresponding to the operating part of the bush and a rear part "P", opposite to the front part in the longitudinal direction, the bush according to the invention comprises essentially:
- a substantially cylindrical body, with a coaxial through-hole 10a and with front end face integral with:
- a hollow head 11, with a front larger base 11a, annular edge 11b, and rear smaller base 11b, connected to the larger base by a circular rim 11c inclined towards the axis of the bush body;
- a threading 12 formed on the outer side surface 10a of the body 10.

According to a first embodiment, the bush according to the invention has a coaxial through-hole 10a which, in a position proximal to the rear opening thereof, has an annular collar 15 projecting radially towards the inside of the axial cavity with an inclination from the outside towards the inside and towards the exterior of the rear part of the bush.

In the axial direction the collar remains within the maximum dimension of the bush, without increasing the axial length thereof.

As will become clear below, the collar 15 forms a retaining means for a pin 200 which can be inserted inside the said bush and, in particular, are designed to form a functional non-return element for the pin 200.

Advantageously, the head 11 has means designed to allow screwing/unscrewing of the bush by means of corresponding operating tools. Advantageously, said means have an internal coaxial through-seat with a hexagonal profile 14 or, alternatively, with a cross-shaped profile for screwing using a standard hex key or a cross-head spanner, which can be operated by means of a screwing tool.

Preferably, the hexagonal profile 154 has a diameter of the circumscribed circumference 14a greater than the internal diameter of the coaxial through-hole 10a of the cylindrical body 10, allowing easy insertion of one end of a pin, as will become clear below.

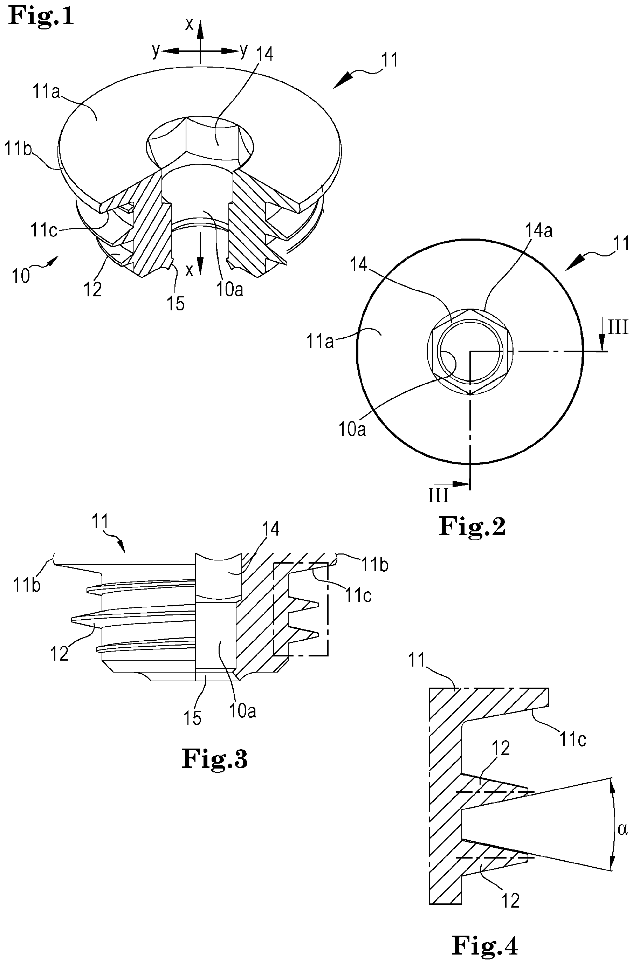

In detail (Fig. 3) preferred embodiments of the bush envisage:
- an external threading 12 with a symmetrical profile, preferably with:
   -- a profile angle α of between 20° and 35°.

The broad profile angle α allows rapid screwing of the bush, while maintaining a high resistance to axial forces for extraction of the bush, which is particularly advantageous for low-density materials.

The cylindrical body generally has an axial length not greater than 10 mm and of between 7 mm and 9 mm and preferably between 7.9 mm and 10 mm.

Preferably, the bush is made of metal with a low content of carbon or other material such as aluminium or Zama.

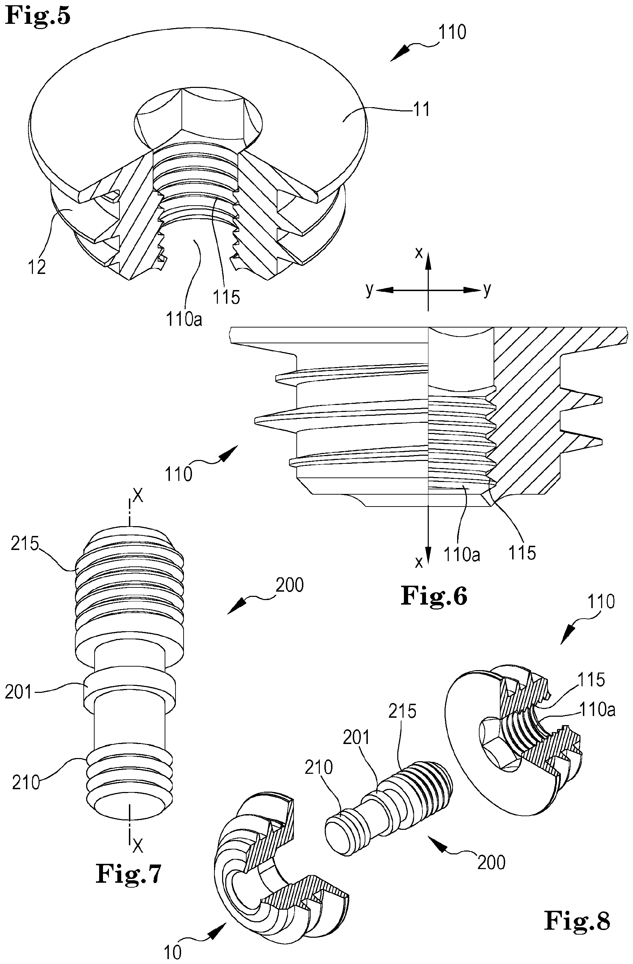

Figs. 5,6 show a second example of embodiment of the bush which in this case has a coaxial through-hole 110a, with means of the female thread type 115 for retaining a pin 200.

For the parts corresponding to the embodiment of Fig.1 the same reference numbers are used.

As shown in Fig. 7 a pin 200, according to the present invention, has a first end with parallel annular reliefs 210, preferably arranged uniformly spaced along the longitudinal axis X-X, and a second opposite end with threading 215 suitable for mating with the corresponding female thread 115 of the second bush 110.

Preferably, the reliefs 210 of the pin 200 have a frustoconical form with the larger base directed towards the pin; this form is designed to make it easier to pass over the collar 15 of the bush 10, during coaxial insertion therein, but, on the other hand, to prevent the pin 200 from coming out as a result of pulling forces exerted in the opposite direction to the direction of insertion.

According to a preferred embodiment the pin 200 has an annular relief 201 arranged in an intermediate position between the two ends and designed to form an end-of-travel stop during insertion inside the respective hole 10a, 110a of one bush 10 or the other bush 110.

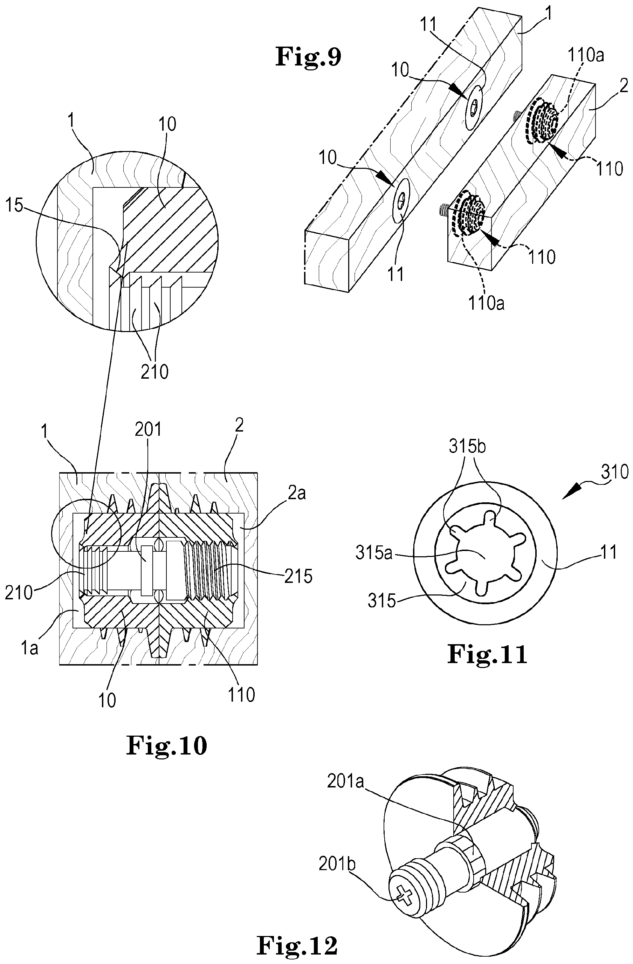

As shown in Fig. 12 described below, it is envisaged that in a further embodiment the collar 201 has the form of a polygonal, for example hexagonal nut 201a, so as to allow engagement with a corresponding spanner for screwing/unscrewing the pin 200 onto/from the female thread 110a of the bush 110.

Alternatively (Fig. 12) a cross-shaped incision 201b may be provided on the end of the pin opposite to the threaded end, for allowing screwing by means of a corresponding tool.

According to a further embodiment of a bush 310 according to the invention, shown in Fig. 11, it is envisaged that the means for retaining the pin 200 comprise an elastic ring 315 which is stably fitted inside the rear part of the through-hole 10a in the body 10 of the bush. The elastic ring may be made for example in the form of a washer made of spring steel.

Advantageously, the elastic ring 315 has a coaxial hole 315a and optionally incisions 315b extending radially from the said coaxial hole and designed to provide the ring 315 with further elasticity so as to allow a deformation towards the front part and/or rear part of the bush, designed to facilitate the coaxial insertion of the pin 200, but at the same time prevent it from coming out, owing to the relative interference between the ring and the reliefs 210 on the said pin.

Although not shown, it is envisaged that, for this solution, the pin may have an end for insertion inside the bush without reliefs 210; preferably the outer surface of the said end may advantageously have a certain roughness for increasing the friction with the ring 315 and therefore the resistance to any axial forces for extraction of the pin.

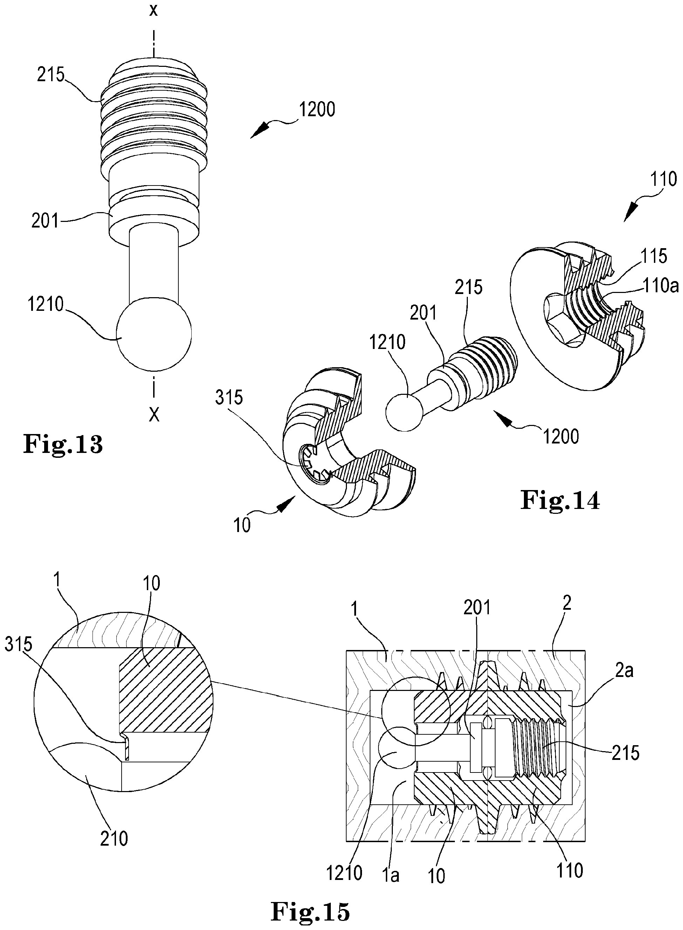

As shown in Figs. 13-15, a further embodiment of a pin 1200 according to the present invention has an end for insertion inside the bush, comprising a head 1210 with a substantially spherical shape having a diameter greater than the diameter of the pin and smaller than the inner diameter of the coaxial hole of the bush.

Preferably, the diameter of the insertion end is greater than the diameter of the coaxial hole 315 of the elastic ring.

As shown in Figs. 14, 15, the pin 1200 may be inserted through the elastic ring 315 which is deformed so as to allow the insertion of the spherical head. Once insertion has been performed, the elastic ring 315 returns into its original configuration ensuring a desired resistance to extraction of the pin 1210.

Advantageously, the pin with the spherical end 1210 inserted inside the bush allows the subsequent disengagement, this being able to be performed by acting with an extraction force in the opposite direction to the insertion direction, said force causing deformation of the elastic ring 315 towards the front part, allowing the spherical head 1210 to pass through.

As shown in Figs. 9, and 10, the assembly formed by the two bushes 10,110 and the pin 200 allows two components to be joined together as follows:
a) providing a first component 1 - for example wooden upright of a chair - and a second component 2 - for example the wooden backrest of a chair - to be joined together;
b) providing a suitable respective hole 1a,2a in the two components;
c) screwing at least a first bush 10 into the first component 1 until the head 11 is flush with the surface of the component 1;
d) screwing at least a second bush 110 into the second component 2 until the head 11 is flush with the surface of the component 2;
e) screwing the threaded part 215 of the pin 200 onto the female thread 115 of the second bush 110;
f) engaging the free end of the pin 200 by inserting it coaxially using a simple pushing force inside the hole 10a of the first bush 10.
   Since the diameter of the circumscribed circumference 14a of the polygonal profile 14 is greater than the internal diameter of the coaxial through-hole 10a in the cylindrical body 10, the introduction of the pin through the head 11 does not damage the profile of the hexagon which remains intact for any further screwing/unscrewing operations;
g) once insertion has been completed, the collar 15 of the bush 10 will be arranged between two annular reliefs 210 of the pin, resulting in a retaining force designed to prevent the pin from coming out in the axial direction and therefore the disengagement of the two components 1,2.

It is envisaged moreover that the second bush 110 and the pin 200 may be pre-assembled either by means of a screw/female thread connection, or else: by forming a single component which comprises as one piece the two parts as shown in Fig. 12; in this case the hexagonal collar 201a and/or the cross-shaped cut 201b have the function of allowing operation of the bush for screwing thereof into the associated second component 2, a hollow seat in the head of the bush therefore not being necessary.

It is therefore clear how the bushes according to the invention are designed to be mounted on components, in particular, but not exclusively wooden components, very rapidly and with optimum axial traction resistance characteristics, having moreover a head which remains flush with the respective surface of the component onto which it is mounted, thereby facilitating and reducing the cost of the finishing operations carried out on the said component, such as painting or lining with upholstery.

In addition, the assembly composed of the two bushes and the pin is such that the operation of coupling two components to be joined together, especially in the particularly complex case of the frame and backrest of a chair, is performed in an easier, rapid and low-cost manner.

Although described in connection with an example of application to chair parts, it is envisaged that the bush 10;110;310 and the bush/pin assembly may be likewise used on kitchen tops and/or lining/decorative panels to be fixed to a wall.

Although described in connection with a number of embodiments and a number of preferred examples of implementation of the invention, it is understood that the scope of protection of the present patent is determined solely by the claims below.

## Claims

1. Bush (10;110;310) comprising:
- a substantially cylindrical, hollow, body (10), with a front end face integral with:
- a substantially frustoconical head (11), with an inner through-seat, a front larger base (11a), comprising an annular edge (11b), and a rear smaller base connected to the larger base by a circular rim (11c) inclined towards the axis of the bush body;
- a coaxial hole (10a) passing through the body (10) and designed to receive a pin (200);
- a threading (12) formed on the outer side surface of the body (10);
- engagement means (14) for engaging with a corresponding tool for screwing/unscrewing the bush;
- retaining means (15;315) associated with the through-hole (10a;315a) and configured to allow retaining of a respective end of a pin (200;1200);
**Characterized in that** said retaining means comprise: an annular collar (15) projecting towards the inside of the through-hole (10a) of the bush at the rear end of the body; or an elastic ring (315) stably applied to the inside of the rear part of the through-hole (10a) of the bush body (10); and
**in that** it has a height of no more than 10 mm.

2. Bush (10) according to Claim 1, **characterized in that** said collar (15) has an inclination towards the rear part of the bush; or **in that** said ring (315) has a coaxial hole (315a) and optionally incisions (315b) extending radially from said central hole and designed to provide the said ring with elasticity.

3. Bush (10;110;310) according to any one of the preceding claims, **characterized in that** the external threading is symmetrical and/or has a profile angle α of between 20° and 35°.

4. Bush (10;110;310) according to any one of Claims 1 to 3, **characterized in that** said engagement means for engaging with a screwing/unscrewing tool comprise a hexagonal profile (14) or a cross-shaped cut formed in the through-seat of the head (11) of the bush.

5. Bush according to the preceding claim, wherein the hexagonal profile (14) has a diameter of the circumscribed circumference (14a) greater than the internal diameter of the coaxial through-hole (10a) of the cylindrical body (10).

6. Bush comprising:
- a substantially cylindrical body (10), with a front end face integral with:
- a substantially frustoconical head (11), with a front larger base (11a), comprising an annular edge (11b), and a rear smaller base connected to the larger base by a circular rim (11c) inclined towards the axis of the bush body;
- a threading (12) formed on the outer side surface of the body (10);
**characterized in that**:
the height of the bush from the front base of the head to the rear end of the body is not greater than 10 mm,
and **in that** it comprises:
- a pin coaxial with the body and configured for coupling with a bush (109;110;310) according to one of the proceeding claims, which pin comprises a first end for insertion in the bush (10;110;310), formed with a plurality of parallel annular reliefs (210), which are preferably arranged uniformly spaced along the longitudinal axis (X-X) of the pin, or with a roughness on the outer surface, or a spherical head (1210) for engagement with respective retaining means of the bush according to one of the preceding claims;
and **in that** the pin and the body are joined together as one piece and said first end of the pin projects from the head.

7. Bush according to Claim 6, wherein said annular reliefs (210) are designed for engagement with a collar of a bush; or wherein said annular reliefs (210), said roughness or said spherical head (1210) are/is designed for engagement with an elastic ring (315) of a bush.

8. Bush according to Claim 6 or 7, wherein the annular reliefs of the pin have a frustoconical form with the larger base directed towards the body of the pin.

9. Bush according to Claim 6, **characterized in that** it has a collar (201) arranged in an intermediate position between the first end and the rear end of the bush body, and designed to form an end-of-travel stop for insertion inside the respective hole (10a, 110a) of a bush (10;110).

10. Bush according to Claim 9, wherein the collar (201) is in the form of polygonal, preferably hexagonal nut designed for engagement with a corresponding spanner for screwing/unscrewing the bush onto/from the female thread of a hole.

11. Bush according to Claim 6, **characterized in that** it comprises a cross-shaped incision (201b) on the head of the first end of the pin.

12. Assembly for fixing component parts (1,2) to be joined together, comprising:
- a first bush (10;310) comprising:
-- a substantially cylindrical, hollow, body (10), with a front end face integral with:
-- a substantially frustoconical head (11), with an inner through-seat, a front larger base (11a), comprising an annular edge (11b), and a rear smaller base connected to the larger base by a circular rim (11c) inclined towards the axis of the bush body;
-- a coaxial hole (10a) passing through the body (10) and designed to receive a pin (200);
-- a threading (12) formed on the outer side surface of the body (10);
-- engagement means (14) for engaging with a corresponding tool for screwing/unscrewing the bush;
**characterized in that** it comprises:
-- retaining means (15;115;315) associated with the through-hole (10a,110a;315a) and configured to allow retaining of a respective end of a pin (200;1200); wherein said first bush (10;310) has a height of no more than 10 mm;
- a second bush (110) comprising:
-- a substantially cylindrical, hollow, body (10), with a front end face integral with:
-- a substantially frustoconical head (11), with an inner through-seat, a front larger base (11a), comprising an annular edge (11b), and a rear smaller base connected to the larger base by a circular rim (11c) inclined towards the axis of the bush body;
-- a coaxial hole (10a) passing through the body (10) and designed to receive a pin (200);
-- a threading (12) formed on the outer side surface of the body (10);
-- engagement means (14) for engaging with a corresponding tool for screwing/unscrewing the bush;
-- retaining means (15;115;315) associated with the through-hole (10a,110a;315a) and configured to allow retaining of a respective end of a pin (200;1200); wherein said second bush (10;110;310) has a height of no more than 10 mm, and:
- a pin (200) which comprises:
-- a first end configured for engagement with retaining means of the first bush (10) and comprising a plurality of parallel annular reliefs (210), preferably arranged uniformly spaced along the longitudinal axis (X-X) of the pin, or a roughness on the surface, or a spherical head (1210); and
-- a second end configured for coupling with retaining means (115) of the second bush (110) and comprising a threading (215); or
- a second bush with pin according to one of Claims 6-11;
said first bush (10;310) comprising retaining means (15;315) for engagement with the first insertion end of the pin (200).

13. Assembly according to the preceding claim, **characterized in that** the first bush is designed according to one of Claims 1-5 and/or **in that** the second bush (110) comprises a female thread (115) formed on the inner surface of the through-hole (110a) and suitable for mating with the threading (215) of the second end of the pin (200).

14. Assembly according to one of claims 12-13, wherein the spherical head (1210) has a diameter smaller than the diameter of the coaxial hole (110a) passing through the body (110) of the first bush and greater than the diameter of the coaxial hole (315a) of the elastic ring (315).

15. Assembly according to one of claims 12-14 wherein the annular reliefs (210) of the pin (200) have a frustoconical form with the larger base directed towards the body of the pin.

16. Assembly according to one of claims 12-15 wherein the pin has a collar (201) arranged in an intermediate position between the first end and the second end of the pin and designed to form an end-of-travel stop for insertion inside the respective hole (10a, 110a) of the first bush (10;110).

17. Assembly according to one of claims 12-16, wherein the external threading of the first and/or of the second bush is symmetrical and/or has a profile angle α of between 20° and 35°.

18. Assembly according to one of claims 12-17, wherein said engagement means for engaging with a screwing/unscrewing tool comprise a hexagonal profile (14) or a cross-shaped cut formed in the through-seat of the head (11) of the bush, and wherein, preferably, the hexagonal profile (14) has a diameter of the circumscribed circumference (14a) greater than the internal diameter of the coaxial through-hole (10a) of the cylindrical body (10).

19. Assembly according to one of Claims 12-18 wherein the pin comprises a cross-shaped incision (201b) on the head of the first end of the pin.

20. Method for fixing a first component (1) and a second component (2) to be joined together, **characterized in that** it comprises the following steps:
a) providing a first component (1) and a second component (2) to be joined together;
b) providing a suitable respective hole in the two components (1,2);
c) providing an assembly according to one of claims 12-19; said first bush (10;310) comprising retaining means (15;315) for engagement with the first insertion end of the pin (200;1200);
d) screwing the first bush (10;310) inside the hole of the first component (1);
e) screwing the second bush (110) onto the second component (2);
f) coupling a first end of the pin (200;1200) with the second bush (110), if the bush and the pin are not formed as one piece;
g) inserting with a pushing force the first insertion end of the pin (200) into the through-seat (10a) of the first bush until the first insertion end of the pin is locked by the retaining means (15;315) of the first bush (10,110).

21. Method according to Claim 20, **characterized in that** said first component (1) is the upright of a chair and said second component (2) is the backrest of a chair and/or **in that**, once it has been screwed into the respective component, the head of the first and/or second bush does not protrude from the respective surface of the component and is preferably arranged flush with the respective surface of the component.

## Patentansprüche

1. Buchse (10;110;310), umfassend:
- einen im Wesentlichen zylindrischen, hohlen Körper (10) mit einer vorderen Stirnfläche verbunden mit:
- einem im Wesentlichen kegelstumpfförmigen Kopf (11) mit einem inneren Durchgangssitz, einer vorderen größeren Basis (11a), die einen ringförmigen Rand (11b) umfasst, und einer hinteren kleineren Basis, die durch einen kreisförmigen Rand (nc), der zur Achse des Buchsenkörpers geneigt ist, mit der größeren Basis verbunden ist;
- ein koaxiales Loch (10a), das durch den Körper (10) verläuft und zur Aufnahme eines Stifts (200) vorgesehen ist;
- ein Gewinde (12), das auf der äußeren Seitenfläche des Körpers (10) ausgebildet ist;
- Eingriffsmittel (14) zum Eingreifen mit einem entsprechenden Werkzeug zum Ein-/Ausdrehen der Buchse;
- Haltemittel (15;315), die mit dem Durchgangsloch (10a;315a) verbunden sind und eingerichtet sind, um ein Halten eines jeweiligen Endes eines Stifts (200;1200) zu ermöglichen;
**dadurch gekennzeichnet, dass**
die besagten Haltemittel Folgendes umfassen: einen ringförmigen Kragen (15), der in das Innere des Durchgangslochs (10a) der Buchse am hinteren Ende des Körpers hineinragt; oder einen elastischen Ring (315), der stabil im Inneren des hinteren Teils des Durchgangslochs (10a) des Buchsenkörpers (10) angebracht ist; und
dass die Höhe nicht mehr als 10 mm beträgt.

2. Buchse (10) nach Anspruch 1, **dadurch gekennzeichnet, dass**
der besagte Kragen (15) eine Neigung zum hinteren Teil der Buchse aufweist; oder dass der besagte Ring (315) ein koaxiales Loch (315a) und optional Einschnitte (315b) aufweist, die sich radial von dem besagten zentralen Loch erstrecken und dazu bestimmt sind, dem besagten Ring Elastizität zu verleihen.

3. Buchse (10;110;310) nach einem der vorhergehenden Ansprüche, **dadurch gekennzeichnet, dass** das äußere Gewinde symmetrisch ist und/oder einen Profilwinkel von zwischen 20° und 35° aufweist.

4. Buchse (10;110;310) nach einem der Ansprüche 1 bis 3, **dadurch gekennzeichnet, dass** die besagten Eingriffsmittel zum Eingreifen mit einem Ein-/Ausdrehwerkzeug ein sechseckiges Profil (14) oder einen kreuzförmigen Einschnitt im Durchgangssitz des Kopfes (11) der Buchse umfassen.

5. Buchse nach dem vorhergehenden Anspruch, wobei das sechseckige Profil (14) einen Durchmesser des umschriebenen Kreises (14a) aufweist, der größer ist als der Innendurchmesser des koaxialen Durchgangslochs (10a) des zylindrischen Körpers (10).

6. Buchse, umfassend:
- einen im Wesentlichen zylindrischen Körper (10) mit einer vorderen Stirnfläche verbunden mit:
einem im Wesentlichen kegelstumpfförmigen Kopf (11) mit einer vorderen größeren Basis (11a), die einen ringförmigen Rand (11b) umfasst, und einer hinteren kleineren Basis, die durch einen kreisförmigen Rand (11c), der zur Achse des Buchsenkörpers geneigt ist, mit der größeren Basis verbunden ist;
- ein Gewinde (12), das auf der äußeren Seitenfläche des Körpers (10) ausgebildet ist;
**dadurch gekennzeichnet, dass:**
die Höhe der Buchse von der vorderen Basis des Kopfes bis zum hinteren Ende des Körpers nicht größer als 10 mm ist, und dass sie Folgendes umfasst:
- einen zum Körper koaxialen Stift, der zum Koppeln mit einer Buchse (109;110;310) nach einem der vorhergehenden Ansprüche eingerichtet ist, wobei der Stift ein erstes Ende zur Einführung in die Buchse (10;110;310) umfasst, das mit einer Vielzahl von parallelen ringförmigen Vorsprüngen (210) ausgebildet ist, die vorzugsweise gleichmäßig entlang der Längsachse (X-X) des Stifts angeordnet sind, oder mit einer Rauheit auf der äußeren Oberfläche ausgebildet ist, oder einem kugelförmigen Kopf (1210) zum Eingreifen mit den jeweiligen Haltemitteln der Buchse nach einem der vorhergehenden Ansprüche aufweist;
und dass der Stift und der Körper als ein Stück miteinander verbunden sind und das besagte erste Ende des Stifts aus dem Kopf herausragt.

7. Buchse nach Anspruch 6, wobei die besagten ringförmigen Vorsprünge (210) zum Eingreifen mit einem Kragen einer Buchse ausgelegt sind; oder wobei die besagten ringförmigen Vorsprünge (210), die Rauheit oder der kugelförmige Kopf (1210) zum Eingreifen mit einem elastischen Ring (315) einer Buchse ausgelegt sind.

8. Buchse nach Anspruch 6 oder 7, wobei die ringförmigen Vorsprünge des Stifts eine kegelstumpfförmige Form mit der größeren Basis in Richtung des Körpers des Stifts aufweisen.

9. Buchse nach Anspruch 6, **dadurch gekennzeichnet, dass** sie einen Kragen (201) in einer Zwischenposition zwischen dem ersten Ende und dem hinteren Ende des Buchsenkörpers aufweist und dazu ausgelegt ist, einen Endanschlag für die Einführung in das jeweilige Loch (10a, 110a) einer Buchse (10;110) zu bilden.

10. Buchse nach Anspruch 9, wobei der Kragen (201) in Form einer polygonalen, vorzugsweise sechseckigen Mutter ausgeführt ist, die zum Eingreifen mit einem entsprechenden Schraubenschlüssel zum Ein- und Ausdrehen der Buchse in/aus dem Innengewinde eines Lochs ausgelegt ist.

11. Buchse nach Anspruch 6, **dadurch gekennzeichnet, dass** sie einen kreuzförmigen Einschnitt (201b) am Kopf des ersten Endes des Stifts umfasst.

12. Baugruppe zur Befestigung von miteinander zu verbindender Bauteile (1,2), umfassend:
- eine erste Buchse (10;310), umfassend:
-- einen im Wesentlichen zylindrischen, hohlen Körper (10) mit einer vorderen Stirnfläche verbunden mit:
-- einem im Wesentlichen kegelstumpfförmigen Kopf (11) mit einem inneren Durchgangssitz, einer vorderen größeren Basis (11a), die einen ringförmigen Rand (11b) umfasst, und einer hinteren kleineren Basis, die durch einen kreisförmigen Rand (11c), der zur Achse des Buchsenkörpers geneigt ist, mit der größeren Basis verbunden ist;
-- ein koaxiales Loch (10a), das durch den Körper (10) verläuft und zur Aufnahme eines Stifts (200) vorgesehen ist;
-- ein Gewinde (12), das auf der äußeren Seitenfläche des Körpers (10) ausgebildet ist;
-- Eingriffsmittel (14) zum Eingreifen mit einem entsprechenden Werkzeug zum Ein- und Ausdrehen der Buchse;
**dadurch gekennzeichnet, dass**
sie Folgendes
-- Haltemittel (15;115;315), die mit dem Durchgangsloch (10a,110a;315a) verbunden sind und eingerichtet sind, um ein Halten eines jeweiligen Endes eines Stifts (200;1200) zu ermöglichen; wobei die besagte erste Buchse (10;310) eine Höhe von nicht mehr als 10 mm aufweist;
- eine zweite Buchse (110), umfassend:
-- einen im Wesentlichen zylindrischen, hohlen Körper (10) mit einer vorderen Stirnfläche verbunden mit:
-- einem im Wesentlichen kegelstumpfförmigen Kopf (11) mit einem inneren Durchgangssitz, einer vorderen größeren Basis (11a), die einen ringförmigen Rand (11b) umfasst, und einer hinteren kleineren Basis, die durch einen kreisförmigen Rand (11c), der zur Achse des Buchsenkörpers geneigt ist, mit der größeren Basis verbunden ist;
-- ein koaxiales Loch (10a), das durch den Körper (10) verläuft und zur Aufnahme eines Stifts (200) vorgesehen ist;
-- ein Gewinde (12), das auf der äußeren Seitenfläche des Körpers (10) ausgebildet ist;
-- Eingriffsmittel (14) zum Eingreifen mit einem entsprechenden Werkzeug zum Ein- und Ausdrehen der Buchse;
-- Haltemittel (15;115;315), die mit dem Durchgangsloch (10a,110a;315a) verbunden sind und eingerichtet sind, um das jeweilige Ende eines Stifts (200;1200) zu halten; wobei die besagte zweite Buchse (10;110;310) eine Höhe von nicht mehr als 10 mm aufweist, und:
- einen Stift (200), umfassend:
-- ein erstes Ende, das zum Eingreifen mit den Haltemitteln der ersten Buchse (10) eingerichtet ist und eine Vielzahl von parallelen ringförmigen Vorsprüngen (210) umfasst, die vorzugsweise gleichmäßig entlang der Längsachse (X-X) des Stifts angeordnet sind, oder eine Rauheit auf der Oberfläche oder einen kugelförmigen Kopf (1210); und
-- ein zweites Ende, das zum Koppeln mit den Haltemitteln (115) der zweiten Buchse (110) eingerichtet ist und ein Gewinde (215) umfasst; oder
- eine zweite Buchse mit Stift nach einem der Ansprüche 6-11; wobei die besagte erste Buchse (10;310) Haltemittel (15;315) zum Eingreifen mit dem ersten Einführende des Stifts (200) umfasst.

13. Baugruppe nach dem vorhergehenden Anspruch, **dadurch gekennzeichnet, dass** die erste Buchse nach einem der Ansprüche 1-5 ausgeführt ist und/oder dass die zweite Buchse (110) ein Innengewinde (115) umfasst, das auf der inneren Oberfläche des Durchgangslochs (110a) ausgebildet ist und zum Koppeln mit dem Gewinde (215) des zweiten Endes des Stifts (200) geeignet ist.

14. Baugruppe nach einem der Ansprüche 12-13, wobei der kugelförmige Kopf (1210) einen Durchmesser aufweist, der kleiner ist als der Durchmesser des koaxialen Lochs (110a), das durch den Körper (110) der ersten Buchse verläuft, und größer als der Durchmesser des koaxialen Lochs (315a) des elastischen Rings (315).

15. Baugruppe nach einem der Ansprüche 12-14, wobei die ringförmigen Vorsprünge (210) des Stifts (200) eine kegelstumpfförmige Form mit der größeren Basis, die in Richtung des Körpers des Stifts weist, haben.

16. Baugruppe nach einem der Ansprüche 12-15, wobei der Stift einen Kragen (201) aufweist, der in einer Zwischenposition zwischen dem ersten Ende und dem zweiten Ende des Stifts angeordnet ist und dazu ausgelegt ist, einen Endanschlag für die Einführung in das jeweilige Loch (10a, 110a) der ersten Buchse (10;110) zu bilden.

17. Baugruppe nach einem der Ansprüche 12-16, wobei das äußere Gewinde der ersten und/oder der zweiten Buchse symmetrisch ist und/oder einen Profilwinkel von zwischen 20° und 35° aufweist.

18. Baugruppe nach einem der Ansprüche 12-17, wobei die besagten Eingriffsmittel zum Eingreifen mit einem Ein-/Ausdrehwerkzeug ein sechseckiges Profil (14) oder einen kreuzförmigen Einschnitt im Durchgangssitz des Kopfes (11) der Buchse umfassen, und wobei vorzugsweise das sechseckige Profil (14) einen Durchmesser des umschriebenen Kreises (14a) aufweist, der größer ist als der Innendurchmesser des koaxialen Durchgangslochs (10a) des zylindrischen Körpers (10).

19. Baugruppe nach einem der Ansprüche 12-18, wobei der Stift einen kreuzförmigen Einschnitt (201b) am Kopf des ersten Endes des Stifts umfasst.

20. Verfahren zur Befestigung eines ersten Bauteils (1) und eines zweiten Bauteils (2), die miteinander zu verbinden sind,
**dadurch gekennzeichnet, dass**
es folgende Schritte umfasst:
a) Bereitstellung eines ersten Bauteils (1) und eines zweiten Bauteils (2), die miteinander zu verbinden sind;
b) Bereitstellung eines geeigneten jeweiligen Lochs in den beiden Bauteilen (1,2);
c) Bereitstellung einer Baugruppe nach einem der Ansprüche 12-19; wobei die besagte erste Buchse (10;310) Haltemittel (15;315) zum Eingreifen mit dem ersten Einführende des Stifts (200;1200) umfasst;
d) Einschrauben der ersten Buchse (10;310) in das Loch des ersten Bauteils (1);
e) Einschrauben der zweiten Buchse (110) in das zweite Bauteil (2);
f) Koppeln eines ersten Endes des Stifts (200;1200) mit der zweiten Buchse (110), falls die Buchse und der Stift nicht als ein Stück ausgebildet sind;
g) Einführen des ersten Einführendes des Stifts (200) mit einer Druckkraft in den Durchgangssitz (10a) der ersten Buchse, bis das erste Einführende des Stifts durch die Haltemittel (15;315) der ersten Buchse (10,110) verriegelt ist.

21. Verfahren nach Anspruch 20, **dadurch gekennzeichnet, dass** das besagte erste Bauteil (1) die Lehne eines Stuhls und das besagte zweite Bauteil (2) die Rückenlehne eines Stuhls ist und/oder dass, sobald es in das jeweilige Bauteil eingeschraubt ist, der Kopf der ersten und/oder zweiten Buchse nicht aus der jeweiligen Oberfläche des Bauteils herausragt und vorzugsweise bündig mit der jeweiligen Oberfläche des Bauteils angeordnet ist.

## Revendications

1. Douille (10;110;310) comprenant :
- un corps (10) creux, sensiblement cylindrique, dont la face frontale est solidaire de :
- une tête sensiblement tronconique (11), avec un siège intérieur traversant, une base avant plus large (11a), comprenant un bord annulaire (11b), et une base arrière plus petite reliée à la base plus large par un bord circulaire (11c) incliné vers l'axe du corps de la douille;
- un trou coaxial (10a) traversant le corps (10) et destiné à recevoir une cheville (200);
- un filetage (12) formé sur la surface latérale extérieure du corps (10);
- des moyens d'engagement (14) pour s'engager avec un outil correspondant pour visser/dévisser la douille;
- des moyens de retenue (15;315) associés à l'orifice traversant (10a;315a) et configurés pour permettre la retenue d'une extrémité respective d'une cheville (200;1200);
**caractérisée en ce que** lesdits moyens de retenue comprennent : un collet annulaire (15) faisant saillie vers l'intérieur du trou de passage (10a) de la douille à l'extrémité arrière du corps; ou un anneau élastique (315) appliqué de manière stable à l'intérieur de la partie arrière du trou de passage (10a) du corps de la douille (10); et **en ce qu'**il a une hauteur maximale de 10 mm.

2. Douille (10) selon la revendication 1, **caractérisée en ce que** ledit collet (15) est incliné vers la partie arrière de la douille; ou **en ce que** ladite bague (315) comporte un trou coaxial (315a) et éventuellement des incisions (315b) s'étendant radialement à partir dudit trou central et destinées à donner de l'élasticité à ladite bague.

3. Bague (10;110;310) selon l'une quelconque des revendications précédentes, **caractérisée par le fait que** le filetage extérieur est symétrique et/ou présente un angle de profil α compris entre 20° et 35°.

4. Douille (10;110;310) selon l'une quelconque des revendications 1 à 3, **caractérisée par le fait que** lesdits moyens d'engagement avec un outil de vissage/dévissage comprennent un profil hexagonal (14) ou une entaille en forme de croix formée dans le siège traversant de la tête (11) de la douille.

5. Douille selon la revendication précédente, dans laquelle le profil hexagonal (14) a un diamètre de la circonférence circonscrite (14a) supérieur au diamètre interne du trou de passage coaxial (10a) du corps cylindrique (10).

6. Douille comprenant
- un corps sensiblement cylindrique (10), dont la face frontale est solidaire avec:
- une tête sensiblement tronconique (11), avec une base avant plus grande (11a), comprenant un bord annulaire (11b), et une base arrière plus petite reliée à la base plus grande par un bord circulaire (11c) incliné vers l'axe du corps de la douille;
- un filetage (12) formé sur la surface latérale extérieure du corps (10);
**caractérisée en ce que** :
la hauteur de la douille depuis la base avant de la tête jusqu'à l'extrémité arrière du corps n'est pas supérieure à 10 mm,
et **en ce qu'**il comprend
- une cheville coaxialle au corps et configurée pour être accouplée à une douille (10;110;310) selon l'une des revendications précédentes,
cette cheville comprend une première extrémité destinée à être insérée dans la douille (10;110;310), formée d'une pluralité de reliefs annulaires parallèles (210), qui sont de préférence uniformément espacés le long de l'axe longitudinal (X-X) de la cheville, ou d'une rugosité sur la surface extérieure, ou d'une tête sphérique (1210) destinée à s'engager dans les moyens de retenue respectifs de la douille conformément à l'une des revendications précédentes,
et **en ce que** la cheville et le corps sont assemblés en une seule pièce et que ladite première extrémité de la cheville fait saillie à partir de la tête avant.

7. Douille selon la revendication 6, dans laquelle lesdits reliefs annulaires (210) sont conçus pour s'engager dans le collet d'une douille; ou dans laquelle lesdits reliefs annulaires (210), ladite rugosité ou ladite tête sphérique (1210) sont conçus pour s'engager dans l'anneau élastique (315) d'une douille.

8. Douille selon la revendication 6 ou 7, dans laquelle les reliefs annulaires de la cheville ont une forme tronconique avec la base la plus large dirigée vers le corps de la cheville.

9. Douille selon la revendication 6, **caractérisée en ce qu'**elle comporte un collet (201) disposé dans une position intermédiaire entre la première extrémité et l'extrémité arrière du corps de la douille, et conçu pour former une butée de fin de course pour l'insertion à l'intérieur du trou respectif (10a, 110a) d'une douille (10;110).

10. Douille selon la revendication 9, dans laquelle le collier (201) se présente sous la forme d'un écrou polygonal, de préférence hexagonal, conçu pour s'engager avec une clé correspondante pour visser/dévisser la douille sur/depuis le filetage femelle d'un trou.

11. Douille selon la revendication 6, **caractérisée en ce qu'**elle comporte une incision en forme de croix (201b) sur la tête de la première extrémité de la cheville.

12. Assemblage pour la fixation de pièces (1,2) à assembler l'une à l'autre, comprenant :
- une première douille (10;310) comprenant:
-- un corps (10) creux, sensiblement cylindrique, dont la face frontale est solidaire à:
-- une tête (11) sensiblement tronconique, avec un siège intérieur traversant, une base avant plus grande (11a), comprenant un bord annulaire (11b), et une base arrière plus petite reliée à la base plus grande par un bord circulaire (11c) incliné vers l'axe du corps de la douille;
-- un trou coaxial (10a) traversant le corps (10) et destiné à recevoir une cheville (200);
-- un filetage (12) formé sur la surface latérale extérieure du corps (10);
-- un moyen d'engagement (14) pour s'engager avec un outil correspondant pour visser/dévisser la douille;
**caractérisé en ce qu'**il comprend
-- des moyens de retenue (15;115;315) associés au trou de passage (10a;110a;315a) et configurés pour permettre la retenue d'une extrémité respective d'une cheville (200;1200); dans laquelle ladite première douille (10;310) a une hauteur ne dépassant pas 10 mm;
- une deuxième douille (110) comprenant:
-- un corps (10) creux, sensiblement cylindrique, dont la face frontale est solidaire :
-- une tête sensiblement tronconique (11), avec un siège intérieur traversant, une base avant plus grande (11a), comprenant un bord annulaire (11b), et une base arrière plus petite reliée à la base plus grande par un bord circulaire (11c) incliné vers l'axe du corps de la douille;
-- un trou coaxial (10a) traversant le corps (10) et destiné à recevoir une cheville (200);
-- un filetage (12) formé sur la surface latérale extérieure du corps (10);
-- des moyens d'engagement (14) pour s'engager avec un outil correspondant pour visser/dévisser la douille;
-- des moyens de retenue (15;115;315) associés au trou de passage (10a;110a;315a) et configurés pour permettre la retenue d'une extrémité respective d'une cheville (200;1200); dans laquelle ladite seconde douille (10;110;310) a une hauteur ne dépassant pas 10 mm, et :
- une cheville (200) qui comprend :
-- une première extrémité configurée pour s'engager dans les moyens de retenue d'une première douille (10) et comprenant une pluralité de reliefs annulaires parallèles (210), de préférence disposés de manière uniforme le long de l'axe longitudinal (X-X) de la cheville, ou une rugosité sur la surface, ou une tête sphérique (1210); et
-- une seconde extrémité configurée pour s'accoupler aux moyens de retenue (115) de la deuxième douille (110) et comprenant un filetage (215); ou
- une deuxième douille avec cheville selon l'une des revendications 6 à 11;
ladite première douille (10;310) comprenant des moyens de retenue (15;315) pour l'engagement avec la première extrémité d'insertion de la cheville (200).

13. Assemblage selon la revendication précédente, **caractérisé par le fait que** la première douille est conçue selon l'une des revendications 1 à 5 et/ou **par le fait que** la deuxième douille (110) comprend un filetage femelle (115) formé sur la surface intérieure de l'orifice traversant (110a) et apte à s'accoupler avec le filetage (215) de la deuxième extrémité de la cheville (200).

14. Assemblage selon l'une des revendications 12 et13, dans lequel la tête sphérique (1210) a un diamètre inférieur au diamètre du trou coaxial (110a) traversant le corps (110) de la douille et supérieur au diamètre du trou coaxial (315a) de l'anneau élastique (315).

15. Assemblage selon l'une des revendications 12 à 14, dans lequel les reliefs annulaires (210) de la cheville (200) ont une forme tronconique dont la base la plus large est dirigée vers le corps de la cheville.

16. Assemblage selon l'une des revendications 12 à 15, dans lequel la cheville comporte une collerette (201) disposée dans une position intermédiaire entre la première extrémité et la deuxième extrémité de la cheville et destinée à former une butée de fin de course pour l'insertion à l'intérieur du trou respectif (10a, 110a) de la première douille (10;110).

17. Assemblage selon l'une des revendications 12 à 16, dans lequel le filetage extérieur de la première et/ou de la deuxième douille est symétrique et/ou présente un angle de profil α compris entre 20° et 35°.

18. Assemblage selon l'une des revendications 12 à 17, dans lequel lesdits moyens d'engagement pour l'engagement avec un outil de vissage/dévissage comprennent un profil hexagonal (14) ou une coupe en forme de croix formée dans le siège traversant de la tête (11) de la douille, et dans lequel, de préférence, le profil hexagonal (14) a un diamètre de la circonférence circonscrite (14a) supérieur au diamètre interne du trou de passage coaxial (10a) du corps cylindrique (10).

19. Assemblage selon l'une des revendications 12 à 18, dans lequel la cheville comprend une incision en forme de croix (201b) sur la tête de la première extrémité de la cheville.

20. Procédé de fixation d'un premier élément (1) et d'un second élément (2) à assembler, **caractérisé en ce qu'**il comprend les étapes suivantes:
a) fournir un premier composant (1) et un second composant (2) à assembler,
b) percer un trou approprié dans les deux composants (1,2);
c) fournir un assemblage selon l'une des revendications 12 à 19;
ladite première douille (10;310) comprenant des moyens de retenue (15;315) pour l'engagement avec la première extrémité d'insertion de la cheville (200;1200);
d) visser la première douille (10;310) à l'intérieur du trou du premier élément (1);
e) visser la deuxième douille (110) sur le deuxième élément (2);
f) accoupler une première extrémité de la cheville (200;1200) avec la deuxième douille (110), si la douille et la cheville ne sont pas formées d'une seule pièce;
g) insérer avec une force de poussée la première extrémité d'insertion de la cheville (200) dans le logement traversant (10a) de la première douille jusqu'à ce que la première extrémité d'insertion de la cheville soit bloquée par les moyens de retenue (15;315) de la première douille (10;110).

21. Procédé selon la revendication 20, **caractérisé en ce que** ledit premier composant (1) est le montant d'une chaise et ledit deuxième élémentt (2) est le dossier d'une chaise et/ou **en ce que**, une fois vissée dans l'élément respectif, la tête de la première et/ou de la seconde douille ne fait pas saillie de la surface respective de l'élément et est de préférence disposée au ras de la surface respective de l'élément.
